# EUROPEAN PATENT SPECIFICATION

(11) **EP 3 646 065 B1**
(45) Date of publication and mention of the grant of the patent: **14.10.2026**
(21) Application number: 18823001.5
(22) Date of filing: 22.06.2018
(51) Int. Cl.: G01V 1/30, G01V 1/34, G06N 3/08

(54) **AUTOMATIC FEATURE EXTRACTION FROM SEISMIC CUBES**
AUTOMATISCHE MERKMALSEXTRAKTION AUS SEISMISCHEN KUBEN
EXTRACTION AUTOMATIQUE DE CARACTÉRISTIQUES À PARTIR DE CUBES SISMIQUES

(30) Priority: 26.06.2017 US 201762525110 P; 13.09.2017 US 201762558288 P
(43) Date of publication of application: 06.05.2020
(73) Proprietor: Services Pétroliers Schlumberger, 75007 Paris (FR); Geoquest Systems B.V., 2586 BJ The Hague (NL)
(72) Inventor: SALMAN, Nader, Arlington, MA 02474 (US); NAJM, Matthieu Georges Maroun, 4068 Stavanger (NO)
(74) Representative: Schlumberger Intellectual Property Department
(86) International application number: PCT/US2018/038920
(87) International publication number: WO 2019/005595

(56) References cited:
- WO-A1-00/14575
- WO-A1-2011/149609
- WO-A2-2011/077223
- WO-A2-2011/077223
- US-A1- 2003 046 006
- US-A1- 2014 188 769
- US-A1- 2014 188 769
- US-A1- 2014 223 351
- US-A1- 2014 278 115
- US-A1- 2015 234 067
- US-A1- 2015 234 067

## Description

### Background

In oil and gas exploration, large amounts of seismic data in a region can be collected. The seismic data can be interpreted using many different techniques to gain insight into the structure of the subterranean domain. The seismic data is often stored in three-dimensional cubes, allowing a user to view "slices" or cross-sections of the seismic domain.

Interpreting the seismic data can include identifying various features that appear in the data. This is generally done manually, with a user reviewing vertical slices and identifying where the seismic data indicates a feature (e.g., a fault or a salt dome) may be located. The calculation and display of various seismic attributes can assist in making clearer where the features are likely to exist. However, even with the assistance of seismic attributes, extracting faults is still a time-consuming task and a laborious step in the seismic interpretation workflow. Further, such human interpretation can be subjective and may lead to inconsistent results and/or features being missed or misclassified, e.g., depending on the care and/or experience of the interpreter.

US 2015/234067 A1 describes a method for adaptively determining faults from geological survey data including generating at least one attribute volume comprising a plurality of attributes from the geological survey data and identifying at least one region of interest on a predetermined cross-section of the attribute volume. At least one seed is added to the region of interest and at least one representative area in accordance with the region of interest is defined. At least one basic geological object is generated by applying a mesh propagation algorithm adapted to generate a surface mesh from said the at least one seed and growth confidence levels for the geological object are determined based on realistic geological principles. The geological object is mapped with colour-coded data of the growth confidence levels and an optimized geological object is generated through manipulation of the geological object.

US 2014/188769 A1 describes a method for analyzing seismic data, comprising processing a plurality of features of interest from a seismic data set using a classification algorithm to output a list of possible classifications for each feature of interest. The list of possible classifications is processed using a ranking algorithm that generates a pool query set of respective queries related to the features of interest and submits the queries to a reviewer to obtain reviewer feedback. The feedback comprises an evaluation of the respective features of interest within queries and the operation of the ranking algorithm is updated based on the reviewer feedback to provide a ranked list of possible classifications for each feature of interest.

WO 00/14575 A1 discloses a computer implemented method and apparatus for automatically picking faults in a recorded 3D seismic trace data volume.

US 2014/223351 A1 discloses techniques for mapping geologic features.

Other techniques are disclosed in US 2014/278115 A1 and WO 2011/077223 A2.

### Summary

The invention is defined by the independent claims. Advantageous features are defined by the dependent claims. Any aspects, embodiments or examples disclosed herein falling outside the scope of the claims are intended to be understood as examples useful for understanding the invention.

According to an aspect, a computer-implemented method according to claim 1 is provided. According to another aspect, a computing system according to claim 10 is provided. According to another aspect, a non-transitory computer-readable medium according to claim 11 is provided.

### Brief Description of the Drawings

The accompanying drawings, which are incorporated in and constitute a part of this specification, illustrate examples of the present teachings and together with the description, serve to explain the principles of the present teachings. In the figures:
Figure 1 illustrates an example of a system that includes various management components to manage various aspects of a geologic environment.
Figure 2A illustrates a flowchart of a method for automated seismic interpretation.
Figure 2B illustrates a conceptual view of a seismic server system.
Figure 3 illustrates a view of a thin client device showing a seismic section image.
Figure 4 illustrates a view of a user interaction with the thin client device.
Figure 5A illustrates a view of the thin client device displaying a quasi-linear feature in the seismic section image to a user, and the user interacting with the display to indicate another potential quasi-linear feature.
Figure 5B illustrates a view of the thin client device displaying two quasi-linear features in the seismic section image.
Figure 6 illustrates a view of the thin client device receiving a gesture (swipe) input from a user.
Figure 7 illustrates a flowchart of a method for automatically identifying quasi-linear features in a seismic image.
Figure 8 illustrates an example of a Voronoi diagram.
Figure 9 illustrates a polygonal line segment to be approximated.
Figures 10A, 10B, 10C, and 10D illustrate a process for approximating the polygonal line segment.
Figure 11 illustrates a seismic section input.
Figure 12A illustrates a feature-likelihood attribute of the seismic cube.
Figure 12B illustrates the feature-likelihood attribute after a filtering operation.
Figure 12C illustrates the feature-likelihood attribute after filtering and edge detection.
Figure 13 illustrates a conceptual view of a nearest neighbor and minimal distance calculation.
Figure 14A illustrates an edge determination of the contours of the feature-likelihood attribute.
Figure 14B illustrates an enlarged view of a portion of Figure 14A.
Figure 15A illustrates edges with Voronoi vertices of the feature-likelihood attribute.
Figure 15B illustrates an enlarged view of a portion of Figure 15A.
Figure 16A illustrates a view of the Voronoi vertices of Figure 16A after clustering.
Figure 16B illustrates a view of sticks representing the contour after clustering and simplification of the Voronoi vertices.
Figure 17 illustrates a view of a triangular nearest-neighbor search using the simplified Voronoi vertices in order to find unidirectional sticks.
Figure 18 illustrates a result with the segments indicating the different features.
Figure 19 illustrates a conceptual view of the seismic server system executing operations of the present disclosure.
Figure 20 illustrates a schematic view of a computing system.

### Detailed Description

Examples of the present disclosure may provide systems, media, and method for facilitating and increasing efficiency in fault (or other subterranean feature) "extraction from" (e.g., identification in) seismic data. Indeed, examples of the present disclosure may make the costly task of manual seismic interpretation more efficient by reducing the time it takes geoscientists to move from a raw seismic cube to an accurately-interpreted seismic cube. Particularly, examples of the present disclosure make use of machine learning to identify subterranean features, and may provide a simplified graphical depiction of such identified features, facilitating user interaction with a visualization of a processed data set, without having to manually pick out the structures and without having to use a local processor to perform the processing tasks, apart from visualization.

It will be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the present disclosure. The first object or step, and the second object or step, are both, objects or steps, respectively, but they are not to be considered the same object or step.

The terminology used in the description herein is for the purpose of describing particular examples and is not intended to be limiting. As used in this description and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

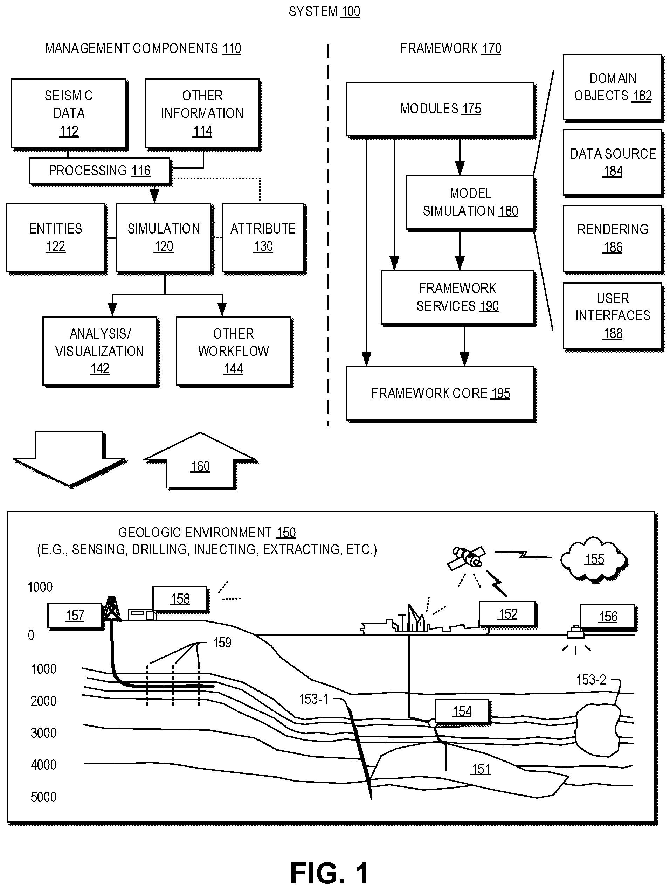

Figure 1 illustrates an example of a system 100 that includes various management components 110 to manage various aspects of a geologic environment 150 (e.g., an environment that includes a sedimentary basin, a reservoir 151, one or more faults 153-1, one or more geobodies 153-2, etc.). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of Figure 1, the management components 110 include a seismic data component 112, an additional information component 114 (e.g., well/logging data), a processing component 116, a simulation component 120, an attribute component 130, an analysis/visualization component 142 and a workflow component 144. In operation, seismic data and other information provided per the components 112 and 114 may be input to the simulation component 120.

In an example, the simulation component 120 relies on entities 122. Entities 122 include earth entities or geological objects such as wells, surfaces, bodies, reservoirs, etc. In the system 100, the entities 122 include virtual representations of actual physical entities that are reconstructed for purposes of simulation. The entities 122 include entities based on data acquired via sensing, observation, etc. (e.g., the seismic data 112 and other information 114). An entity is characterized by one or more properties (e.g., a geometrical pillar grid entity of an earth model may be characterized by a porosity property). Such properties represent one or more measurements (e.g., acquired data), calculations, etc.

In an example, the simulation component 120 may operate in conjunction with a software framework such as an object-based framework. In such a framework, entities may include entities based on pre-defined classes to facilitate modeling and simulation. A commercially available example of an object-based framework is the MICROSOFT^{®} .NET^{®} framework (Redmond, Washington), which provides a set of extensible object classes. In the .NET^{®} framework, an object class encapsulates a module of reusable code and associated data structures. Object classes can be used to instantiate object instances for use in by a program, script, etc. For example, borehole classes may define objects for representing boreholes based on well data.

In the example of Figure 1, the simulation component 120 may process information to conform to one or more attributes specified by the attribute component 130, which may include a library of attributes. Such processing may occur prior to input to the simulation component 120 (e.g., consider the processing component 116). As an example, the simulation component 120 may perform operations on input information based on one or more attributes specified by the attribute component 130. In an example, the simulation component 120 may construct one or more models of the geologic environment 150, which may be relied on to simulate behavior of the geologic environment 150 (e.g., responsive to one or more acts, whether natural or artificial). In the example of Figure 1, the analysis/visualization component 142 may allow for interaction with a model or model-based results (e.g., simulation results, etc.). As an example, output from the simulation component 120 may be input to one or more other workflows, as indicated by a workflow component 144.

As an example, the simulation component 120 may include one or more features of a simulator such as the ECLIPSE^{™} reservoir simulator (Schlumberger Limited, Houston Texas), the INTERSECT^{™} reservoir simulator (Schlumberger Limited, Houston Texas), etc. As an example, a simulation component, a simulator, etc. may include features to implement one or more meshless techniques (e.g., to solve one or more equations, etc.). As an example, a reservoir or reservoirs may be simulated with respect to one or more enhanced recovery techniques (e.g., consider a thermal process such as SAGD, etc.).

In an example, the management components 110 may include features of a commercially available framework such as the PETREL^{®} seismic to simulation software framework (Schlumberger Limited, Houston, Texas). The PETREL^{®} framework provides components that allow for optimization of exploration and development operations. The PETREL^{®} framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of modeling, simulating, etc.).

In an example, various aspects of the management components 110 may include add-ons or plug-ins that operate according to specifications of a framework environment. For example, a commercially available framework environment marketed as the OCEAN^{®} framework environment (Schlumberger Limited, Houston, Texas) allows for integration of add-ons (or plug-ins) into a PETREL^{®} framework workflow. The OCEAN^{®} framework environment leverages .NET^{®} tools (Microsoft Corporation, Redmond, Washington) and offers stable, user-friendly interfaces for efficient development. In an example, various components may be implemented as add-ons (or plug-ins) that conform to and operate according to specifications of a framework environment (e.g., according to application programming interface (API) specifications, etc.).

Figure 1 also shows an example of a framework 170 that includes a model simulation layer 180 along with a framework services layer 190, a framework core layer 195 and a modules layer 175. The framework 170 may include the commercially available OCEAN^{®} framework where the model simulation layer 180 is the commercially available PETREL^{®} model-centric software package that hosts OCEAN^{®} framework applications. In an example, the PETREL^{®} software may be considered a data-driven application. The PETREL^{®} software can include a framework for model building and visualization.

As an example, a framework may include features for implementing one or more mesh generation techniques. For example, a framework may include an input component for receipt of information from interpretation of seismic data, one or more attributes based at least in part on seismic data, log data, image data, etc. Such a framework may include a mesh generation component that processes input information, optionally in conjunction with other information, to generate a mesh.

In the example of Figure 1, the model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components.

As an example, the domain objects 182 can include entity objects, property objects and optionally other objects. Entity objects may be used to geometrically represent wells, surfaces, bodies, reservoirs, etc., while property objects may be used to provide property values as well as data versions and display parameters. For example, an entity object may represent a well where a property object provides log information as well as version information and display information (e.g., to display the well as part of a model).

In the example of Figure 1, data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored using the model simulation layer 180, which can recreate instances of the relevant domain objects.

In the example of Figure 1, the geologic environment 150 may include layers (e.g., stratification) that include a reservoir 151 and one or more other features such as the fault 153-1, the geobody 153-2, etc. As an example, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, Figure 1 shows a satellite in communication with the network 155 that may be configured for communications, noting that the satellite may additionally or instead include circuitry for imagery (e.g., spatial, spectral, temporal, radiometric, etc.).

Figure 1 also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

As mentioned, the system 100 may be used to perform one or more workflows. A workflow may be a process that includes a number of worksteps. A workstep may operate on data, for example, to create new data, to update existing data, etc. As an example, a may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL^{®} software, for example, that operates on seismic data, seismic attribute(s), etc. As an example, a workflow may be a process implementable in the OCEAN^{®} framework. As an example, a workflow may include one or more worksteps that access a module such as a plug-in (e.g., external executable code, etc.).

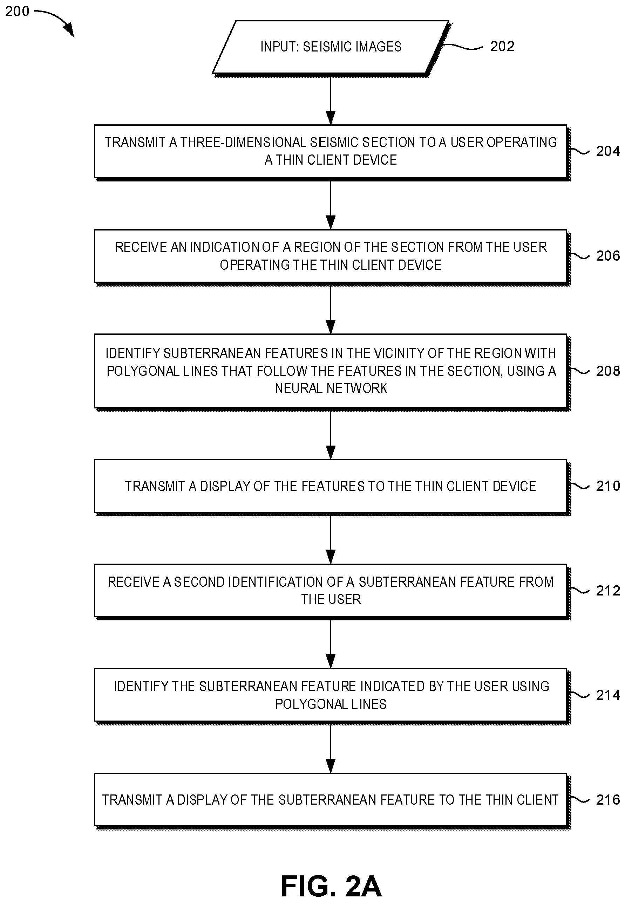

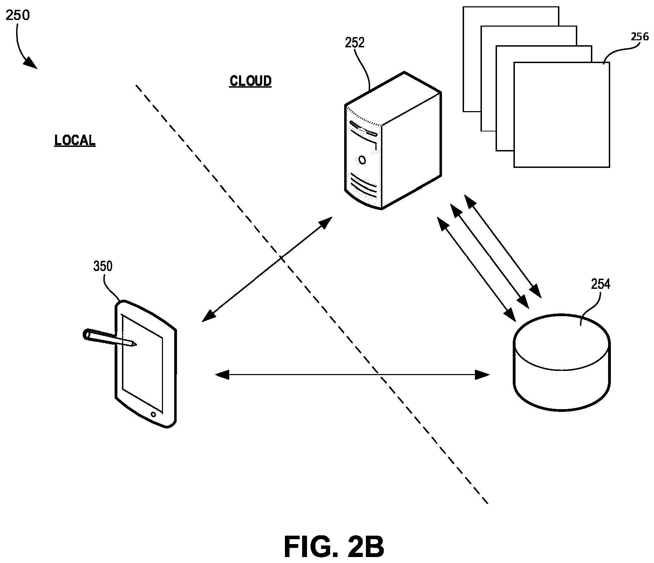

Figure 2A illustrates a flowchart of a method for seismic interpretation. It will be appreciated that the blocks presented herein may be rearranged, combined, or split without departing from the scope of this disclosure. Further, the method 200 proceeds by operation of a server and a thin client device, which are or include computer processors, as will be described in greater detail below. Figure 2B illustrates a conceptual view of a seismic server system 250, which is employed to implement the method 200.

At a high level, the seismic server system 250 includes a server 252, a data storage 254, and a thin client device 350. In general, a thin client device may be any type of computer, such as a desktop, laptop, tablet, or smartphone. The thin client device may not be called upon to perform intense processing operations, as these may be performed on a remote server where hardware with greater processing power may be conveniently located. Instead, the thin client device may be fed with visualization data, which it may then display. Further, the thin client device may be capable of sending data back to the server, e.g., user input.

The thin client device 300 may be the "local" side of the system 250, while the server 252 and the data storage 254 may be remote therefrom, e.g., on a "cloud" side of the system 250. It will be appreciated that the local and cloud sides may be remote from one another, and may communicate via the internet or another communications network. Further, the server 252 and the data storage 254 may be maintained at the same location, or may be remote from one another. The seismic server 254 may run one or more instances 256 of the seismic processing platform, and thus certain aspects of the present method 200 may be performed in parallel. Further, the server 252 and the data storage 254 may be in communication with one another via a high-bandwidth, low-latency connection allowing for the execution of multiple threads.

The method 200 begins with receiving seismic data, such as seismic images, as at 202. The data may be stored in the data storage 254 and is accessible to the server 252. Further, these seismic images may be generated from field data that was collected using seismic receivers (geophones, hydrophones, etc.) deployed in a suitable manner in the field, based on seismic waves generated and propagated through a subterranean domain of interest and received by the receivers. The seismic images may be organized in cubes, and may be pre-processed in any manner, e.g., may be stacked, adjusted to account for moveout, etc., and various seismic attributes (e.g., dip) may be applied thereto.

The method 200 further includes transmitting a seismic section to a user operating the thin client device 300, as at 204. The seismic sections may be portions of the seismic data, and represent a subterranean volume of interest, e.g., for exploration. The seismic sections may be two-dimensional or three-dimensional, and may be viewable by a user using the thin client device 350, once transmitted thereto.

The seismic section transmitted to the thin client device 300 may be selected and transmitted in response to user input/selection. For example, the user may draw a polygonal line on a cross-section of a seismic cube, and a corresponding seismic section may be generated and transmitted to the user for viewing.

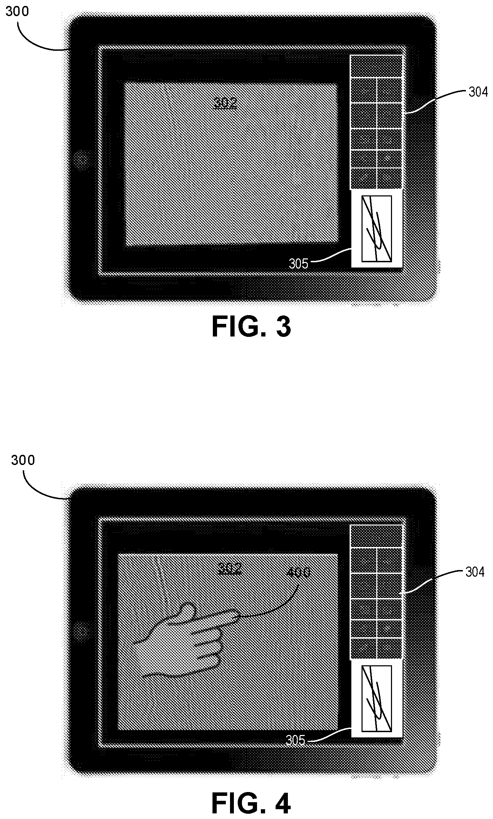

Figure 3 illustrates the thin client device 300. As shown, the thin client device 300 provides a visualization of a seismic section 302, which may be provided to the user of the thin client device 300 for interpretation. Further, the thin client device 300 may include windows for receiving input. For example, the windows may include a menu 304 and a cross-section view 305. The menu 304 may allow a user to select operations that are available, while the cross-section view 305 may allow a user to select a particular section.

Returning again to Figure 2A, the method 200 proceeds to receiving an indication of a region of the section from the user operating the thin client device 300, as at 206. For example, the user may click a mouse or tap the screen of the device 300, or otherwise indicate a particular region of the visualization. This user-input information is transmitted back to the server from the thin client device 300. Figure 4 illustrates an example of a user indicating a region of the seismic section 302 using his/her finger 400.

The method 200 then proceeds to identifying one or more subterranean features in the vicinity of the indicated region using polygonal lines that follow the features in the section, as at 208. This may be accomplished using a neural network, as will be described in greater detail below. The features may include features that are quasi-linear features, which are features that may be accurately approximated using a plurality of line segments joined at vertices to form a polygonal line. Such features may include faults, salt domes, horizons, and/or the like. The features include features that are non-quasi-linear, such as disks or other similar shapes, which are approximated by a polygonal line (formed as a polygon). An example of a process not only identifying the features, but then representing them as polygonal lines will be discussed below. In some examples, block 208 may be a pre-processing step, and might occur before the other blocks in the method 200. For example, a processor on the server may seek to identify features of a certain type (or potentially all features) in the seismic data that is received. In other examples, the identification of the region at 206 may be the trigger that initiates processing, thereby avoiding identifying features in regions that are not of interest to the interpreter.

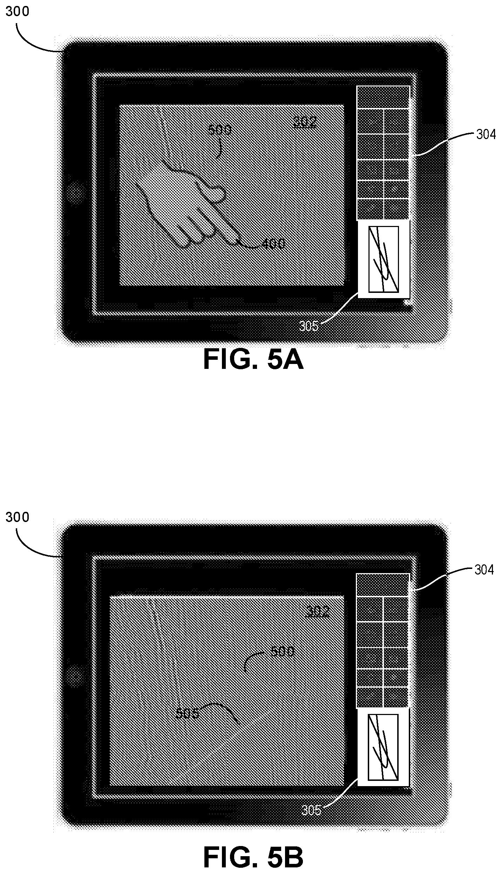

The method 200 then transmits a display of the identified features to the thin client device 300, as at 210. Figure 5A illustrates an example of a quasi-linear feature 500 (e.g., a fault) identified in the section 302, and particularly in the region identified by the user. The transmission may be a separate display, or may provide a line 502 to be overlayed on the visualization of the seismic section 302 that was previously provided to the thin client device 300.

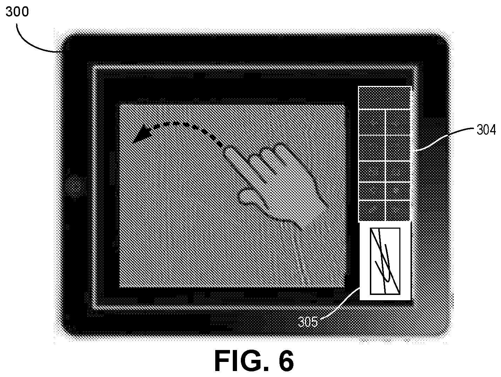

**In** some cases, the user may believe additional features are present in the region that were not identified by the server. Accordingly, the method 200 may include receiving a second identification, this time of a feature, from the user, as at 212. In particular, as also shown in Figure 5, the user may tap or click, drag along, or otherwise indicate a position or positions in the section as potentially including another feature, such as a fault, that was not initially identified by the server. The server may then identify the feature indicated by the user, again using polygonal lines, as at 214. The server may then transmit a visualization of the feature 505, again including a polygonal line, if one is found, back to the thin client device 300, as at 216, and shown in Figure 5B. Additionally, Figure 6 illustrates a user employing a swiping gesture to advance between seismic sections using the thin client device 300.

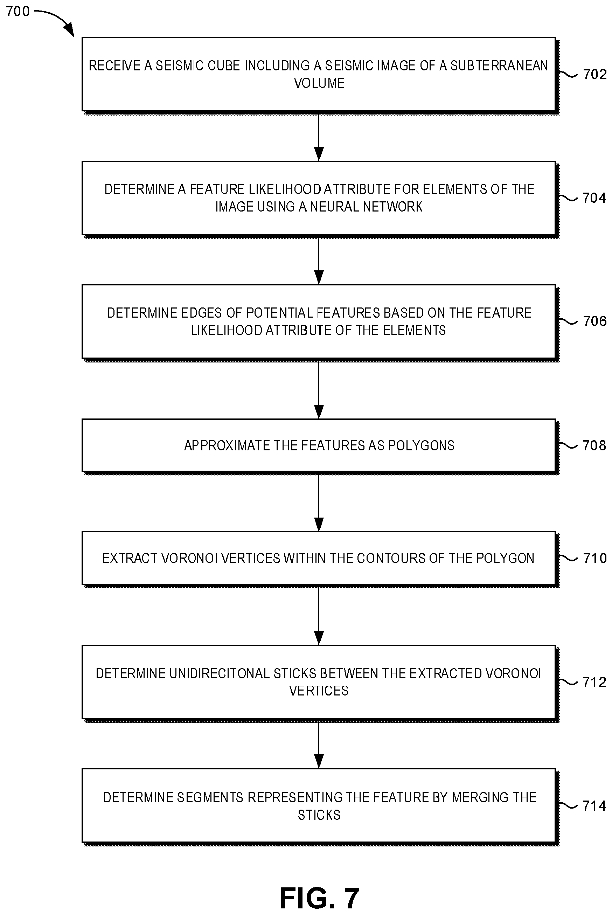

Figure 7 illustrates a flowchart of a method 700 for identifying features in a seismic section using polygonal lines. At least a portion of the method 700 may be representative of at least a portion of the block 208 of Figure 2A, but in other examples, may be part of a separate method or standalone. Further, the method 700 proceeds by operation of a processor, including a server, which is configured to communicate visualization data to, and receive user input from, a thin client device, as mentioned above.

**In** general, the method 700 takes as input fault (or other quasi-linear or non-quasi-linear feature) attributes in an image format. The method 700 may filter the images in order to detect attribute edges. After approximating the shapes as polygons, it calculates the Voronoi diagrams of each polygon and extracts Voronoi vertices of the image. A medial axis of the shape that corresponds to the output is then determined, which is the polygonal line joining some or all of the extracted Voronoi vertices. For difficult cases, such as an attribute with an X shape, the method 700 may include clustering Voronoi vertices in order to distinguish clusters that match lines that are not curved or bent. A simplification can be made to the representation of the detected feature, e.g., to reduce the number of segments in the polygonal line representing the feature.

As used herein, a "fault" is a general object in the seismic cube and, for instance, may define "fault surfaces". At the scale of a section view, a unit of the feature may be a "segment," while the association of multiple "segments" can represent a feature. Further, "sticks" are polygonal lines detected in a section whether there are segments or not, and one, several or many "sticks" can make up a single "segment".

Before continuing with the description of the method 700, a discussion of the theoretical background for several of the elements of the method 700 is instructive. Examples of the method 700 may be based on geometrical concepts, such as an Edge Canny Detector. The Edge Canny Detector is an edge detection operator that can be considered as including applying a Gaussian filter, finding intensity gradients of the image, applying non-maximum suppression, applying double threshold to determine potential edges and tracking edges by hysteresis.

Another concept may include K-nearest-neighbor (kNN) classification. For example, the nearest neighbor search may be considered as follows: given a set of points *P* = *{pᵢ}_{i=1,...,n}* in a vector space X, these points may be preprocessed in such a way that given a new query point q of X, finding the points in P that are nearest to q can be performed efficiently. Here, X will be the Euclidean vector space R². A KD-tree may be used, which is a space-partitioning data structure for organizing points, e.g., a binary tree in which each node is a two-dimensional point. The classification includes finding the nearest neighbors by comparing the point to each leafs of the tree.

Yet another concept is the Voronoi diagram and medial axis. Let *P* = *{pᵢ}_{i=1,...,n}* be a finite set of points in R^{d}. The Voronoi diagram associated to P (denoted *V(P))* is a cellular decomposition of R^{d} into d-dimensional convex polytopes called Voronoi cells. There is one cell for each point *pᵢ* of P and the Voronoi cell of a point *pᵢ,* denoted *V (pᵢ₎,* is composed of the set of points of R^{d} closer to *pᵢ* than to any other point in *P:* $V \left(pi\right) = \left\{p∈{R}^{d}:∀j\neq i,\left‖p-{p}_{i}\right‖\leq \left‖p-{p}_{j}\right‖\right\} .$

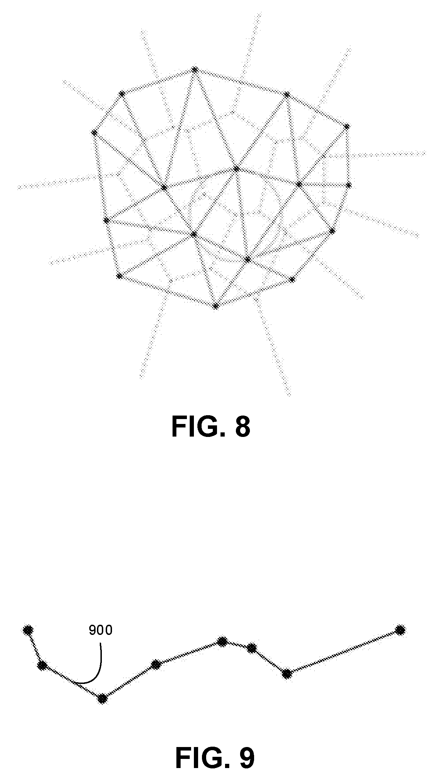

The Voronoi cell *V (pi)* can also be considered as the intersection of n-1 half-spaces. Each such half-space contains *pᵢ* and is bounded by the bisector planes of segments *[pᵢpⱼ], j* ≠ *i. V (pi)* is therefore a convex polytope, possibly unbounded. In two dimensions, the Voronoi edges are the edges shared by two Voronoi cells and Voronoi vertices are the points shared by three or more Voronoi cells. Figure 8 illustrates a Voronoi diagram of a set of points with a Delaunay triangulation that satisfies an empty circle criteria.

Another concept is the Ramer-Douglas-Peucker Algorithm. This algorithm reduces the number of points in a curve that is approximated by a series of points. It draws a line between the first and the last point in the set of points that form the curve. It checks which point in between is the farthest away from this line. If the point is closer than a distance 'epsilon', it removes all these in-between points. If it is not, the curve is split into two parts: (1) from the first point up to and including the outlier point, and (2) the outlier point and the last one. The function is recursively called on both resulting curves and the two reduced forms of the curve are put back together.

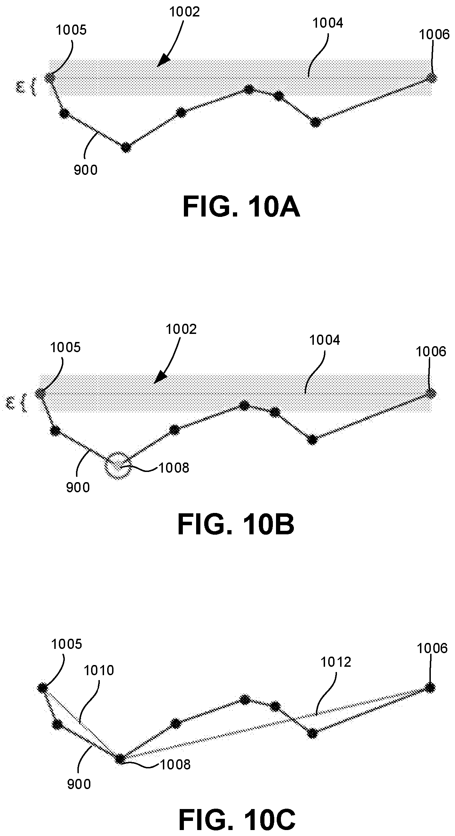

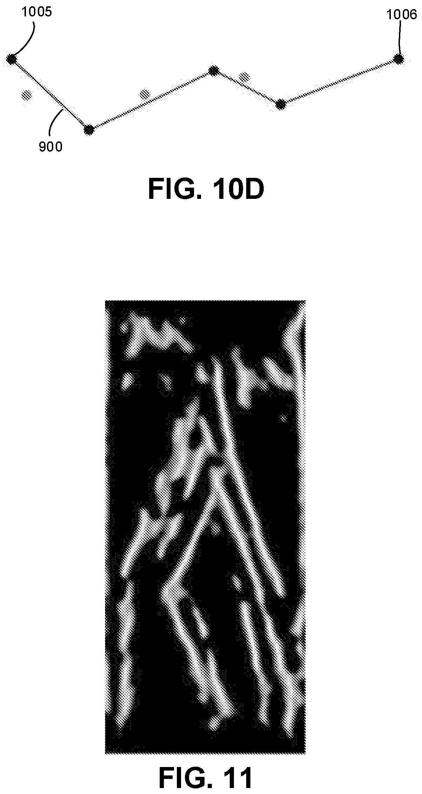

Figure 9 illustrates a polygonal line 900 to be simplified using, e.g., the Ramer-Douglas-Peucker Algorithm. To do so, as shown in Figure 10A, an epsilon value is selected, which defines the width of an area 1002 defined about a line 1004 extending between two (e.g., the first and last) points 1005, 1006 of the polygonal line 900. Next, as shown in Figure 10B, a point 1008 that is farthest from the area 1002 is identified. Now, instead of one line 1004, two lines 1010, 1012 are drawn between the two points 1005, 1006, as shown in Figure 10C and the point 1008, and the process is repeated for the lines 1010, 1012, e.g., until, as shown in Figure 10D, the farthest point from the lines drawn is within the epsilon area or according to another stop criteria.

Referring again to Figure 7, the method 700 begins by receiving a seismic cube including a seismic image of a subterranean volume, as at 702. The method 700 then proceeds to determining a feature likelihood attribute for elements of the image, as 704. One example seismic (e.g., fault) cube input is based on the output of a machine-learning methods or "deep-learning," which are able to identify faults (or other features) in seismic cubes. The machine-learning algorithm may be trained using a training corpus of seismic images, in which the features may be identified by a human user. The machine-learning algorithm may thus establish connections which enable it to determine the feature-likelihood attribute. The machine-learning algorithm may be trained before the implementation of the method 700 or may be at least partially trained during such implementation, according to feedback from users. For example, upon the user indicating a feature that was not represented as a polygon in the section, the machine-learning algorithm may adjust the feature-likelihood attribute, and, accordingly, may be configured to adjust its future interpretation of seismic cubes accordingly.

The output of the machine-learning algorithm may be a mask of the elements (pixels or voxels), providing the feature-likelihood attribute, where 1 means 100% sure that the feature is present at this location, and 0 is 100% sure that it is not, with values in between representing the relative certainty. Figure 11 illustrates these values, with lighter areas indicate a higher probability of feature, in this case a fault, presence. However, feature such as faults may not be expected to be as wide as those shown. In one approach, a thinned feature-likelihood attribute image may be generated. Moreover, the shape describing where the fault might be as output of the machine-learning method, may be an artifact of the deep learning model. Indeed, during the learning phase, attributes may be widened because the model may not be capable of being trained on lines.

The method 700 thus proceeds to determining edges of potential features based on the feature-likelihood attribute, as at 706. A preliminary step in order to remove edge effects of the image may be performed. Attributes residing at the edges of the image may be truncated by the edges of the section, and thus may not be considered as convex. To simplify the process and consider convex attributes, the image may be "padded" with elements that are black (0 value). As a result, elements (pixels or voxels) on the edges of the image may not be considered as part of an attribute, and the shapes may be considered as convex. The coordinate system may not be changed and may still employ the original image properties.

A series of image treatments may be applied in order to facilitate extraction of the contours of the features. First, a smoothing process may be applied in order to reduce noise of the input image. Gaussian blurring or bilateral filtering are two examples of such a smoothing process. Next, the image, which is in gray level, may be reduced to a binary image, e.g., using Otsu's method, for example.

An Edge Detector, such as Canny, may then be applied to detect the contours in the image. The output is then a binary array with dimensions equal to the height and the width of the image, filled with binary values where 1 means that the pixel is part of the feature edges and 0 means it is not.

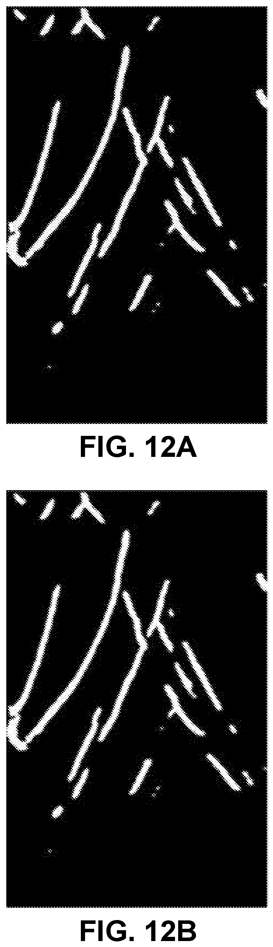

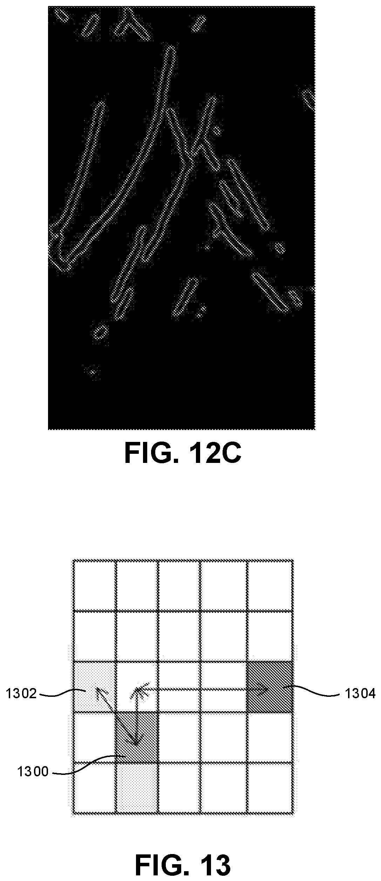

Figure 12A illustrates the feature likelihood attribute applied to the seismic section of Figure 11. Figure 12B illustrates the image after Gaussian filtering, and Figure 12C illustrate the image after edge detecting.

Next, the coordinates of the pixels that are part of the feature edges are extracted. To do so, the pixels may first be ordered, e.g., as part of a clustering process, which may include finding the nearest neighbors of each pixel or voxel. A K-nearest-neighbors with KD-tree process may be employed, which clusters the point coordinates by contours and orders them in the clockwise order, to name one specific example. Figure 13 illustrates an example of finding the nearest neighbors to a pixel 1300. In particular, the pixel 1302 is likely to be considered the nearest neighbor, while the pixel 1304 may not be too far away from the pixel 1300 and may thus be part of another contour.

In a specific example, the first rank of the list is given to the edge pixel that is closest to the bottom of the image. The method then searches for the first edge pixel's nearest neighbors (e.g., at most two nearest neighbors), and assigns to the one clockwise the second rank. It then again searches for the nearest neighbor, but this time, there may be only one. When the distance between each neighbor is larger than a predetermined maximum distance (e.g., square root of 10 pixels), a new list may be created, which demonstrates that it is a new contour. When one of the image's edges is reached, the algorithm follows its process by doing a K-nearest-neighbor search back from the beginning of the current list but in the counter-clockwise order.

The output is a list wrapping tuples of an integer and a list of points (each point defined by a couple of integers). Each low-level list describes one single contour. The contours are ordered by one of the axis. The integers, linked to the lists of point coordinates, correspond to the rank of the contour in question in the section. The length of the top-level list corresponds to the number of contours detected. Before extracting medial axis from these attributes, ones that are not convex may be considered as artifacts and may be removed.

With the edges identified, the method 700 proceeds to approximating the features as polygons (e.g., using three or more polygonal lines), as at 708, and extracting Voronoi vertices within the contours of the polygons, as at 710. The original image can be split up in layers in which there is a single contour. The method 700 then approximates the shape defined by the contours as a polygon, in order to draw the Voronoi diagram. For that, the aim is to create a sample of equidistant points of the list of the contour's edges' coordinates. The distance between two polygon edges may be maintained large enough to have a coherent medial axis, while not being too long so as to deteriorate performance. One of ordinary skill in the art will be able to determine such a tradeoff. In order to have a sample of points, a scanline or similar algorithm can be used, for example. The Voronoi vertices obtained with this algorithm may be aligned closer to the medial axis than some other algorithms. The Voronoi diagram is then calculated, as discussed above. The coordinates of the Voronoi vertices inside the polygons are employed to approximate the attribute's edges.

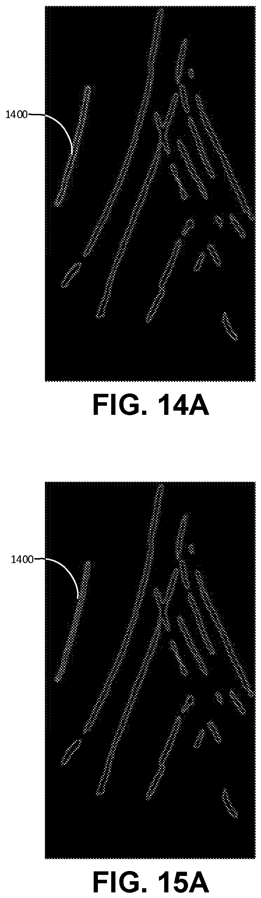

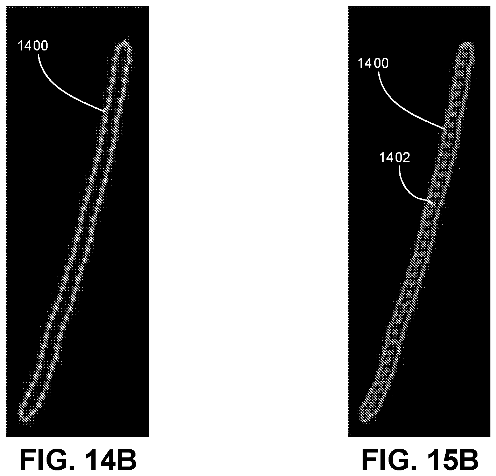

Figure 14A illustrates an edges sample of a contour 1400. Figure 15A illustrates the contour 1400 with Voronoi vertices within the edges indicated. Figure 14B illustrates an enlarged view of the contour 1400, and Figure 15B illustrated an enlarged view of the contour 1400 with the Voronoi vertices 1402 indicated.

Next, the method 700 proceeds to determining unidirectional sticks between the extracted Voronoi vertices, as at 712. The term "direction" refers to the direction in the image in which the stick points, e.g., top right, top left, bottom right, bottom left, etc. Thus, unidirectional sticks include lines that point in a single direction.

In an example, the method 700 may detect faults (or other features) as polygonal lines. In particular, examples may result in lines that follow along, to the extent possible, discernible features in the seismic cube. In some instances, the machine learning programs can have outcomes that are more complex than lines, for example, when two different attributes cross each other, or two curved attributes meet at one of their extremities. The method 700 may thus be configured to handle these type of shapes. In order to do this, the method 700 may include splitting some the "sticks" (segments between two Voronoi vertices) into a list of smaller sticks which are unidirectional (i.e., not curved or bent). The polygonal lines may thus be determined by juxtaposing aligned sticks which have approximately the same direction in the plane.

For example, the short sticks extracted from the Voronoi vertices may be merged with the sticks that that belong to the same segment. These may be referred to as "unit sticks". The method 700 may ensure the unit sticks are unidirectional. In order to extract the unit sticks, a list of points is created that matches to a "unit stick". The list of points may be built using one or more criteria. From the list of points to be considered, a linear regression is performed, and then a correlation factor is employed, set to a predetermined limit. If the points are sufficiently close together, as compared to the scale of the image, the correlation factor might be less than the value set as a limit. These points may be considered to match to a unit stick if the maximal distance to the regression line is shorter than a previously defined distance. This distance can be added as a parameter of the criteria. Once multiple sets of points have been considered, a list of sticks is created.

From the list of sticks obtained from the extraction of the Voronoi vertices, each stick is considered separately and evaluated using the criteria. When a stick is judged as meeting the criteria, it is identified and set aside. A series of such determines proceeds, until the sticks satisfy the criterion.

Manual clustering may be used to define the unit sticks. For example, the sticks may be split where the edges of two or more contours cross. Specifically, for the segments of the list of sticks that links two adjacent Voronoi vertices, the method 700 may include checking the segments to determine if they intersect one of the contour's edges. If as segment does intersect an edge (being tangent may not be considered as crossing the edges), the list defining the segment may be partitioned into two child lists, which are split where the intersection occurs. This splitting may only be called for one time, as the child lists theoretically may not cross contour edges after such splitting.

In addition, clustering on angles may be employed. Clustering on angles considers the angles between the segments joining two adjacent Voronoi vertices and one of the axis, and splitting where there is a sufficiently large change in amplitude. For example, clustering on angles may include computing angles between each segment that links two adjacent Voronoi vertices of the stick and one of the axis. Due to the nature of the Delaunay triangles, the juxtaposition of the Voronoi vertices may appear like a zig-zag. So to analyze the general direction of the stick, the mean value may be employed. To find the sufficiently large changes in amplitude, a discrete derivative may be calculated. Then, the Ramer-Douglas-Peucker algorithm, discussed above, may be applied in order to extract the absolute value of the peaks of the derivative. Finally, the list may be partitioned into two "child" lists and split where the amplitude peak is found. This process may be repeated until the child-sticks each satisfy the criterion, or there are no more peaks in the derivatives of the angles. Next, the method 700 may include removing the small sticks. The clustering may also be configured to overlook the lists of points with two points or less.

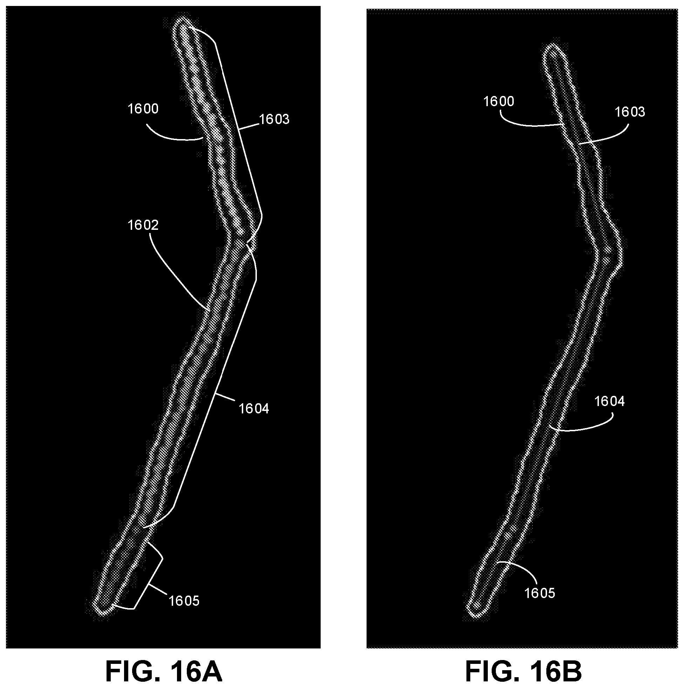

Figures 16A illustrate a series of Voronoi vertices 1600 defined in a feature 1602. The vertices 1600 may be clustered and split using a clustering on angles process, as described herein. In particular, the vertices 1600 are partitioned into three sets of vertices 1603, 1604, 1605, based on angles therebetween. As shown in Figure 16B, the sets 1603-1605 may be linked together and simplified, as discussed herein.

Next, the segments from which the polygonal lines are determined may be defined by merging the sticks, as at 714. In some examples, the "unit sticks" are merged into polygonal lines with a minimum number of points. A simplification algorithm may be applied on the single sticks, i.e., the output of the previous worksteps. For instance, the Ramer-Douglas-Peucker Algorithm with a predetermined epsilon value can be employed. With the "unit sticks" of the section defined, the polygonal lines (segments) may then be defined therefrom.

To determine which sticks should be merged together, a list of criteria may be employed. For example, one stick and one candidate for merger therewith into the same segment may be considered. If the highest-ordered point of the stick is aligned with the points of the candidate stick, and their directions are the same, then the method 700 may determine that the stick and the candidate belong to the same segment.

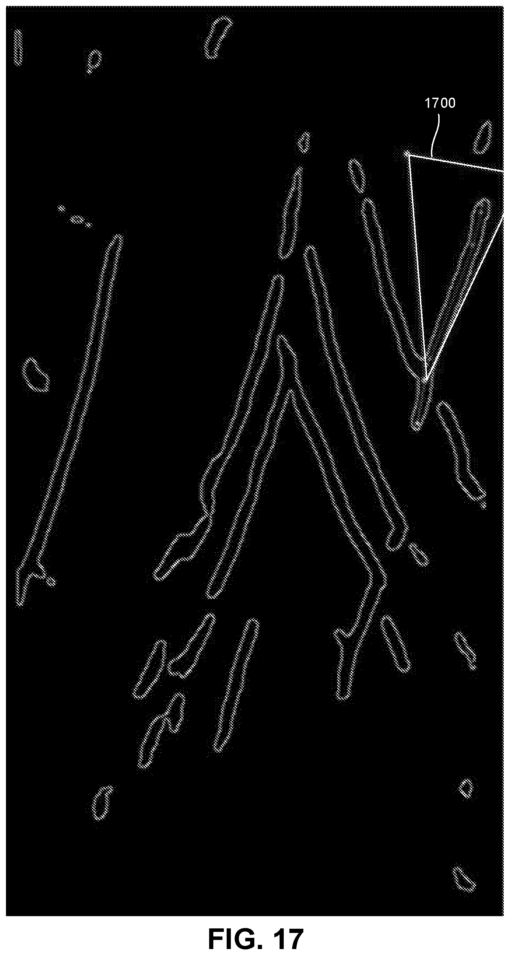

Accordingly, the method 700 may proceed by beginning from the lowest-ordered stick in the image (the "object" stick), and the method 700 may search for sticks nearby the object stick. The search area defining what is "nearby" can be for example a triangle having one of the vertices as the highest-ordered point of the stick, with the "direction" of the triangle 1700 the same as the stick, as shown in Figure 17. The triangle 1700 may have a predefined area and/or dimension.

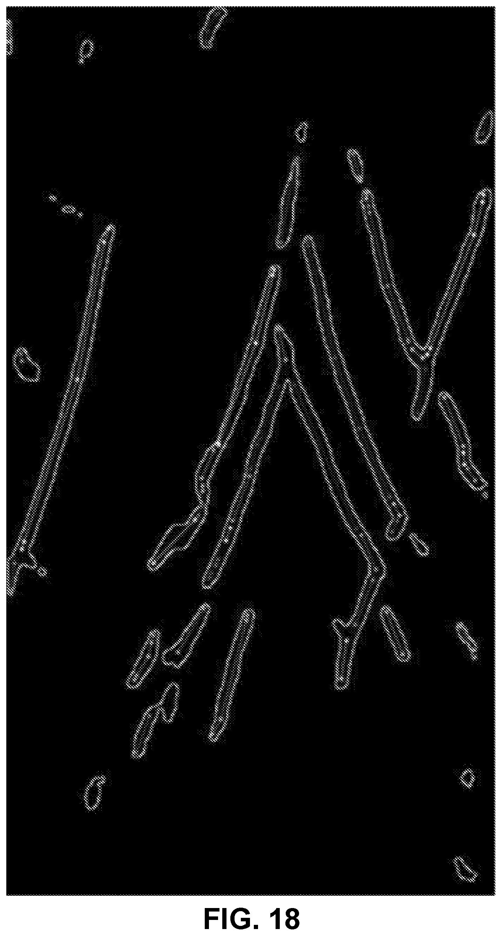

From the sticks that do not belong to segments, the sticks that have their lowest-ordered point in the area are kept. The sticks kept are then ordered from the closest to the object stick to the farthest therefrom. Next, the criterion is applied with the first candidate stick. If it satisfies the criterion, the sticks are merged, and become the object stick. Otherwise, the object stick is compared to the next candidate stick in the list. This process can be repeated until a next stick is not found, which may indicate that all sticks that are part of the segment have been found and merged. Thus, the method 700 may proceed to merging sticks for the next segment. Figure 18 illustrates a result of this method, with the segments indicating the different features, with a minimum of complexity (e.g., fewest vertices while still staying within the contours), as shown.

The methods presented above are based on computational geometry and aim to extract faults or other seismic patterns like salt bodies. The methods increase process efficiency by saving the user's time as part of an ordered combination of worksteps. Instead of spending many seconds on each single segment per section, the user can extract the fault, with this method and only with one mouse click, capitalizing on a trained neural-networks' ability to determine the feature-likelihood attribute. Further, with, e.g., one mouse click, multiple seismic sections segments may be extracted from the same feature, or within a section, the faults with the same inclination (or another attribute) may be selected.

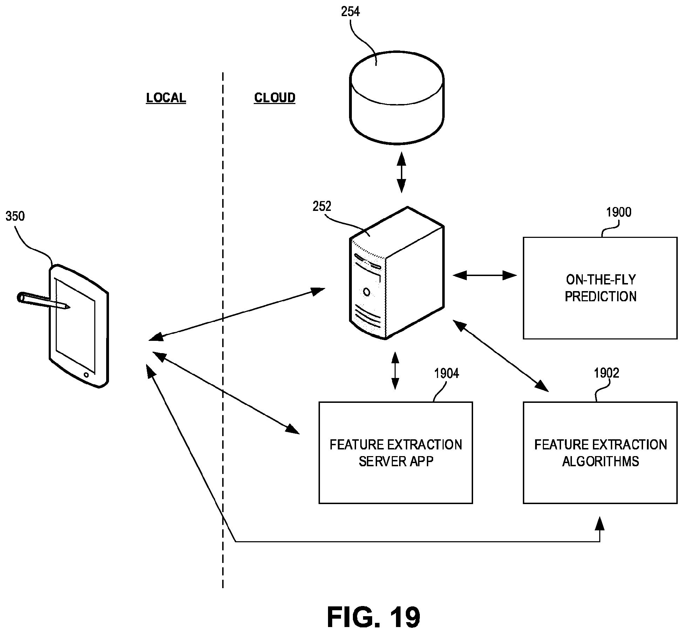

Figure 19 illustrates a conceptual view of the seismic server system 250 performing at least some of the functions of the method described above. As shown, the thin client device 300 communicates with the server 252 and/or the data storage 254. Further, the server 252 is configured to perform various tasks. For example, the server 252 may execute on-the-fly prediction of subterranean features, as at 1900. This may be proxied by the seismic server and thus may not need to access data. The server 252 also executes feature extraction algorithms, as at 1902 and as discussed above with respect to Figure 7 to generate the feature likelihood attribute. The server 252 further executes a feature extraction server application, as at 1904. This may support the operation of the thin client device 300. For example, the server-side scripts may execute as part of this application, and static webpages and scripts may execute in the browser may be generated and/or hosted using this application.

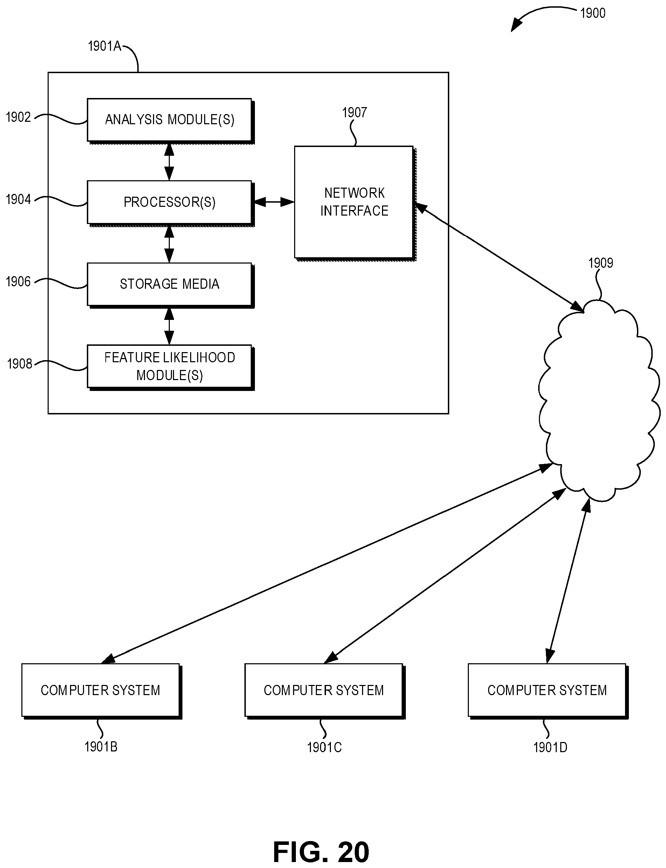

In some examples, the methods of the present disclosure may be executed by a computing system. Figure 20 illustrates an example of such a computing system 2000, in accordance with some examples. The computing system 2000 may include a computer or computer system 2001A, which may be an individual computer system 2001A or an arrangement of distributed computer systems. The computer system 2001A includes one or more analysis modules 2002 that are configured to perform various tasks according to some examples, such as one or more methods disclosed herein. To perform these various tasks, the analysis module 2002 executes independently, or in coordination with, one or more processors 2004, which is (or are) connected to one or more storage media 2006. The processor(s) 2004 is (or are) also connected to a network interface 2007 to allow the computer system 2001A to communicate over a data network 2009 with one or more additional computer systems and/or computing systems, such as 2001B, 2001C, and/or 2001D (note that computer systems 2001B, 2001C and/or 2001D may or may not share the same architecture as computer system 2001A, and may be located in different physical locations, e.g., computer systems 2001A and 2001B may be located in a processing facility, while in communication with one or more computer systems such as 2001C and/or 2001D that are located in one or more data centers, and/or located in varying countries on different continents).

A processor may include a microprocessor, microcontroller, processor module or subsystem, programmable integrated circuit, programmable gate array, or another control or computing device.

The storage media 2006 may be implemented as one or more computer-readable or machine-readable storage media. Note that while in the example of Figure 20 storage media 2006 is depicted as within computer system 2001A, in some examples, storage media 2006 may be distributed within and/or across multiple internal and/or external enclosures of computing system 2001A and/or additional computing systems. Storage media 2006 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY^{®} disks, or other types of optical storage, or other types of storage devices. Note that the instructions discussed above may be provided on one computer-readable or machine-readable storage medium, or may be provided on multiple computer-readable or machine-readable storage media distributed in a large system having possibly plural nodes. Such computer-readable or machine-readable storage medium or media is (are) considered to be part of an article (or article of manufacture). An article or article of manufacture may refer to any manufactured single component or multiple components. The storage medium or media may be located either in the machine running the machine-readable instructions, or located at a remote site from which machine-readable instructions may be downloaded over a network for execution.

In some examples, computing system 2000 contains one or more feature likelihood module(s) 2008. In the example of computing system 2000, computer system 2001A includes the feature likelihood module 2008. In some examples, a single feature likelihood module may be used to perform some aspects of one or more examples of the methods disclosed herein. In other examples, a plurality of feature likelihood modules may be used to perform some aspects of methods herein.

It should be appreciated that computing system 2000 is merely one example of a computing system, and that computing system 2000 may have more or fewer components than shown, may combine additional components not depicted in the example of Figure 20, and/or computing system 2000 may have a different configuration or arrangement of the components depicted in Figure 20. The various components shown in Figure 20 may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of the present disclosure.

Computational interpretations, models, and/or other interpretation aids may be refined in an iterative fashion; this concept is applicable to the methods discussed herein. This may include use of feedback loops executed on an algorithmic basis, such as at a computing device (e.g., computing system 2000, Figure 20), and/or through manual control by a user who may make determinations regarding whether a given step, action, template, model, or set of curves has become sufficiently accurate for the evaluation of the subsurface three-dimensional geologic formation under consideration.

## Claims

1. A computer-implemented method for interpreting seismic data, comprising:
receiving (202, 702) seismic data representing a subterranean volume, at a server (252), wherein the seismic data is acquired via sensing;
transmitting (204) a section of the seismic data to a thin client device (350);
determining (704), using the server (252), a feature-likelihood attribute of at least a portion of a section of the seismic data using a machine-learning algorithm, wherein the feature-likelihood attribute comprises a value for elements of the section, the value being based on a likelihood that the element represents part of a subterranean feature;
receiving an indication of an area in the section that includes a subterranean feature from the thin client device (350);
identifying (706), using the server (252), contours of the subterranean feature in the indicated area based in part on the feature-likelihood attribute of the section, wherein identifying comprises approximating the subsurface feature as a polygon;
determining (708-714), using the server (252), a polygonal line that approximates the subterranean feature in the indicated area, by
identifying (706) edges of the subterranean feature;
generating (710) a Voronoi diagram of the edges to determine Voronoi vertices representing the subterranean feature; and
connecting (712-714) at least a portion of the Voronoi vertices to form the polygonal line; and
transmitting data representing the subterranean feature in the section, based at least in part on the polygonal line, from the server (252) to the thin client device (350), wherein the thin client device causes a visualization of the section, including a representation of the subterranean feature in the section of the seismic data, to be displayed to a user.

2. The method of claim 1, wherein determining (704) the feature-likelihood attribute comprises processing the section using a neural network to determine the values for the elements.

3. The method of claim 1, further comprising applying a filter to the seismic data prior to identifying the contours.

4. The method of claim 1, wherein connecting the at least a portion of the Voronoi vertices to form the polygonal line comprises:
determining (712) unidirectional sticks extending between two or more of the Voronoi vertices;
merging (714) the unidirectional sticks using a clustering algorithm to form a segment; and
simplifying the segment by approximating a shape of the merged unidirectional sticks.

5. The method of claim 1, wherein the subterranean feature comprises quasi-linear feature (500).

6. The method of claim 1, further comprising:
receiving, from the thin client device (350), an indication of a feature in the section that was not represented by the polygonal line;
adjusting the fault-likelihood attribute based on the indication; and
determine a polygonal line representing the feature in the section based on the adjusted fault-likelihood attribute.

7. The method of claim 1, wherein the elements of the section comprise pixels or voxels in the section.

8. The method of claim 1, wherein the section is three-dimensional.

9. The method of claim 1, wherein identifying the contours of the subterranean feature comprises:
applying a smoothing process to reduce noise in the area of the section;
reducing the area from a gray level image to a binary image;
applying an edge detector to the binary image to generate a binary array having dimensions equal to a height and width of the binary image, wherein the binary array comprises binary values representing whether or not individual pixels are part of a subterranean feature.

10. A computing system, comprising:
one or more processors (1904); and
a memory system (1906) comprising one or more non-transitory computer-readable media storing instructions that, when executed by at least one of the one or more processors, cause the computing system to perform the steps of the method of any preceding claim.

11. A non-transitory computer-readable medium storing instructions that, when executed by one or more processors (1904) of a computing system, cause the computing system to perform the step of the method of any of claims 1 to 9.

## Patentansprüche

1. Computerimplementiertes Verfahren zum Interpretieren seismischer Daten, umfassend:
Empfangen (202, 702) seismischer Daten, die ein unterirdisches Volumen darstellen, an einem Server (252), wobei die seismischen Daten durch Abfühlen erfasst werden;
Übertragen (204) einer Sektion der seismischen Daten an eine Thin-Client-Vorrichtung (350);
Bestimmen (704), unter Verwendung des Servers (252), eines Merkmalswahrscheinlichkeitsattributs mindestens eines Abschnitts einer Sektion der seismischen Daten unter Verwendung eines Maschinenlernenalgorithmus, wobei das Merkmalswahrscheinlichkeitsattribut einen Wert für Elemente der Sektion umfasst, wobei der Wert auf einer Wahrscheinlichkeit, dass das Element Teil eines unterirdischen Merkmals darstellt, basiert;
Empfangen einer Angabe eines Bereichs in der Sektion, der ein unterirdisches Merkmal einschließt, von der Thin-Client-Vorrichtung (350);
Identifizieren (706), unter Verwendung des Servers (252), von Konturen des unterirdischen Merkmals in dem angegebenen Bereich basierend teilweise auf dem Merkmalswahrscheinlichkeitsattribut der Sektion, wobei das Identifizieren ein Approximieren des unterirdischen Merkmals als ein Polygon umfasst;
Bestimmen (708-714), unter Verwendung des Servers (252), einer polygonalen Linie, die das unterirdische Merkmal in dem angegebenen Bereich approximiert, durch
Identifizieren (706) von Kanten des unterirdischen Merkmals;
Erzeugen (710) eines Voronoi-Diagramms der Kanten, um Voronoi-Eckpunkte, die das unterirdische Merkmal darstellen, zu bestimmen; und
Verbinden (712-714) mindestens eines Abschnitts der Voronoi-Eckpunkte, um die polygonale Linie auszubilden; und
Übertragen von Daten, die das unterirdische Merkmal in der Sektion darstellen, basierend mindestens teilweise auf der polygonalen Linie, von dem Server (252) an die Thin-Client-Vorrichtung (350), wobei die Thin-Client-Vorrichtung veranlasst, dass an einen Benutzer eine Visualisierung der Sektion, einschließlich einer Darstellung des unterirdischen Merkmals in der Sektion der seismischen Daten, angezeigt wird.

2. Verfahren nach Anspruch 1, wobei das Bestimmen (704) des Merkmalswahrscheinlichkeitsattributs ein Verarbeiten der Sektion unter Verwendung eines neuronalen Netzes umfasst, um die Werte für die Elemente zu bestimmen.

3. Verfahren nach Anspruch 1, ferner umfassend ein Anwenden eines Filters auf die seismischen Daten vor dem Identifizieren der Konturen.

4. Verfahren nach Anspruch 1, wobei das Verbinden des mindestens einen Abschnitts der Voronoi-Eckpunkte, um die polygonale Linie auszubilden, umfasst:
Bestimmen (712) unidirektionaler Stäbe, die sich zwischen zwei oder mehr der Voronoi-Eckpunkte erstrecken;
Zusammenführen (714) der unidirektionalen Stäbe unter Verwendung eines Clustering-Algorithmus, um ein Segment auszubilden; und
Vereinfachen des Segments durch Approximieren einer Form der zusammengeführten unidirektionalen Stäbe.

5. Verfahren nach Anspruch 1, wobei das unterirdische Merkmal ein quasilineares Merkmal (500) umfasst.

6. Verfahren nach Anspruch 1, ferner umfassend:
Empfangen, von der Thin-Client-Vorrichtung (350), einer Angabe eines Merkmals in der Sektion, das nicht durch die polygonale Linie dargestellt wurde;
Anpassen des Fehlerwahrscheinlichkeitsattributs basierend auf der Angabe; und
Bestimmen einer polygonalen Linie, die das Merkmal in der Sektion darstellt, basierend auf dem angepassten Fehlerwahrscheinlichkeitsattribut.

7. Verfahren nach Anspruch 1, wobei die Elemente der Sektion Pixel oder Voxel in der Sektion umfassen.

8. Verfahren nach Anspruch 1, wobei die Sektion dreidimensional ist.

9. Verfahren nach Anspruch 1, wobei das Identifizieren der Konturen des unterirdischen Merkmals umfasst:
Anwenden eines Glättungsprozesses, um Rauschen in dem Bereich der Sektion zu reduzieren;
Reduzieren des Bereichs von einem Graustufenbild auf ein Binärbild;
Anwenden eines Kantendetektors auf das Binärbild, um ein Binär-Array, das Abmessungen gleich einer Höhe und Breite des Binärbilds aufweist, zu erzeugen, wobei das Binär-Array Binärwerte, die darstellen, ob einzelne Pixel Teil eines unterirdischen Merkmals sind oder nicht, umfasst.

10. Computersystem, umfassend:
einen oder mehrere Prozessoren (1904); und
ein Speichersystem (1906) umfassend ein oder mehrere nicht flüchtige computerlesbare Medien, die Anweisungen speichern, die, wenn sie durch mindestens einen des einen oder der mehreren Prozessoren ausgeführt werden, das Computersystem veranlassen, die Schritte des Verfahrens nach einem der vorstehenden Ansprüche durchzuführen.

11. Nicht flüchtiges computerlesbares Medium, das Anweisungen speichert, die, wenn sie durch einen oder mehrere Prozessoren (1904) eines Computersystems ausgeführt werden, das Computersystem veranlassen, den Schritt des Verfahrens nach einem der Ansprüche 1 bis 9 durchzuführen.

## Revendications

1. Procédé mis en œuvre par ordinateur destiné à interpréter des données sismiques, comprenant :
la réception (202, 702) de données sismiques représentant un volume souterrain, au niveau d'un serveur (252), dans lequel les données sismiques sont acquises par détection ;
la transmission (204) d'une section des données sismiques à un dispositif de client léger (350) ;
la détermination (704), à l'aide du serveur (252), d'un attribut de vraisemblance de caractéristique d'au moins une partie d'une section des données sismiques à l'aide d'un algorithme d'apprentissage automatique, dans lequel l'attribut de vraisemblance de caractéristique comprend une valeur pour des éléments de la section, la valeur étant sur la base d'une vraisemblance que l'élément représente une partie d'une caractéristique souterraine ;
la réception d'une indication d'une zone dans la section qui comporte une caractéristique souterraine à partir du dispositif de client léger (350) ;
l'identification (706), à l'aide du serveur (252), des contours de la caractéristique souterraine dans la zone indiquée sur la base en partie de l'attribut de vraisemblance de caractéristique de la section, dans lequel l'identification comprend l'approximation de la caractéristique souterraine en tant que polygone ;
la détermination (708-714), à l'aide du serveur (252), d'une ligne polygonale qui correspond approximativement à la caractéristique souterraine dans la zone indiquée, par
identification (706) de contours de la caractéristique souterraine ;
génération (710) d'un diagramme de Voronoï des contours afin de déterminer des sommets de Voronoï représentant la caractéristique souterraine ; et
liaison (712-714) d'au moins une partie des sommets de Voronoï afin de former la ligne polygonale ; et
la transmission de données représentant la caractéristique souterraine dans la section, sur la base, au moins en partie, de la ligne polygonale, à partir du serveur (252) au dispositif de client léger (350), dans lequel le dispositif de client léger amène une visualisation de la section, comportant une représentation de la caractéristique souterraine dans la section des données sismiques, à être affichée à un utilisateur.

2. Procédé selon la revendication 1, dans lequel la détermination (704) de l'attribut de vraisemblance de caractéristique comprend le traitement de la section à l'aide d'un réseau neuronal afin de déterminer les valeurs pour les éléments.

3. Procédé selon la revendication 1, comprenant en outre l'application d'un filtre aux données sismiques avant d'identifier les contours.

4. Procédé selon la revendication 1, dans lequel la liaison de l'au moins une partie des sommets de Voronoï afin de former la ligne polygonale comprend :
la détermination (712) de bâtons unidirectionnels s'étendant entre deux ou plusieurs des sommets de Voronoï ;
la fusion (714) des bâtons unidirectionnels à l'aide d'un algorithme de regroupement afin de former un segment ; et
la simplification du segment par approximation d'une forme des bâtons unidirectionnels fusionnés.

5. Procédé selon la revendication 1, dans lequel la caractéristique souterraine comprend une caractéristique quasi-linéaire (500).

6. Procédé selon la revendication 1, comprenant en outre :
la réception, à partir du dispositif de client léger (350), d'une indication d'une caractéristique dans la section qui n'était pas représentée par la ligne polygonale ;
l'ajustement de l'attribut de vraisemblance de faille sur la base de l'indication ; et
la détermination d'une ligne polygonale représentant la caractéristique dans la section sur la base de l'attribut de vraisemblance de faille ajusté.

7. Procédé selon la revendication 1, dans lequel les éléments de la section comprennent des pixels ou des voxels dans la section.

8. Procédé selon la revendication 1, dans lequel la section est tridimensionnelle.

9. Procédé selon la revendication 1, dans lequel l'identification des contours de la caractéristique souterraine comprend :
l'application d'un processus de lissage afin de réduire un bruit dans la zone de la section ;
la réduction de la zone d'une image de niveau de gris à une image binaire ;
l'application d'un détecteur de contour à l'image binaire afin de générer une matrice binaire ayant des dimensions égales à une hauteur et à une largeur de l'image binaire, dans lequel la matrice binaire comprend des valeurs binaires représentant si des pixels individuels font ou non partie d'une caractéristique souterraine.

10. Système informatique, comprenant :
un ou plusieurs processeurs (1904) ; et
un système de mémoire (1906) comprenant un ou plusieurs supports lisibles par ordinateur non transitoires stockant des instructions qui, lorsqu'elles sont exécutées par au moins l'un du ou des processeurs, amènent le système informatique à effectuer les étapes du procédé selon l'une quelconque revendication précédente.

11. Support lisible par ordinateur non transitoire stockant des instructions qui, lorsqu'elles sont exécutées par un ou plusieurs processeurs (1904) d'un système informatique, amènent le système informatique à effectuer les étapes du procédé selon l'une quelconque des revendications 1 à 9.
